(19) Europäisches Patentamt
European Patent Office
Office européen des brevets

(11) **EP 4 304 066 A1**

(12) **EUROPEAN PATENT APPLICATION**

(43) Date of publication:
**10.01.2024  Bulletin 2024/02**

(21) Application number: **22183483.1**

(22) Date of filing: **07.07.2022**

(51) International Patent Classification (IPC):
**H02M 1/00** (2006.01)   **H02M 3/335** (2006.01)

(52) Cooperative Patent Classification (CPC):
**H02M 1/0009; H02M 1/0025; H02M 3/33515;
H02M 3/33523; H02M 3/33592;** H02M 1/0019

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Tridonic GmbH & Co. KG**
**6851 Dornbirn (AT)**

(72) Inventors:
• **Stark, Stefan**
**6850 Dornbirn (AT)**

• **Nachbaur, Stefan**
**6850 Dornbirn (AT)**
• **Schertler, Markus**
**6850 Dornbirn (AT)**
• **Walch, Patrick**
**6850 Dornbirn (AT)**

(74) Representative: **Rupp, Christian et al**
**Mitscherlich PartmbB**
**Patent- und Rechtsanwälte**
**Karlstraße 7**
**80333 München (DE)**

(54) **A SENSING CIRCUIT FOR AN ISOLATED CONVERTER**

(57)    The present disclosure relates to the field of switched mode power supplies (SMPS) and isolated converters, in particular for lighting technology. The present disclosure provides a sensing circuit 100 for an isolated converter 201. The sensing circuit 100 is configured to obtain load current information 101, and to obtain load voltage information 102. The sensing circuit 100 is further configured to determine, by a correction module 103 of the sensing circuit 100, corrected load current information 104 based on the load current information 101, the load voltage information 102 and a correction formula 105, wherein the correction formula 105 is configured to compensate a frequency dependent behaviour of the sensing circuit 100, and output the corrected load current information 104.

Fig. 1

**EP 4 304 066 A1**

**Description**

TECHNICAL FIELD

The present disclosure relates to the field of switched mode power supplies (SMPS) and isolated converters, in particular for lighting technology, and provides an improved sensing circuit, e.g., for an isolated converter, which compensates a frequency behavior of the sensing circuit and enables a stable load current over a whole load voltage range. More precisely, the invention relates to improved regulation of an output current in an isolated converter by correcting a measured current value. The present disclosure also provides a corresponding method and an LED converter comprising the sensing circuit.

BACKGROUND

A conventional current source (e.g., a synchronous flyback converter) can be used to control a load current or a load voltage (e.g., an LED current or an LED voltage). To enable said controlling, a measured variable is provided as an input to an analog-to-digital converter (ADC) of an application-specific integrated circuit (ASIC) of the conventional current source. To obtain said measured variable, several methods are possible. For a non safety extra low voltage (SELV) converter (e.g., an synchronous buck) a resistor in a load path can be used. For a SELV converter (e.g., an LLC, an LCC or a synchronous flyback (sFLB)) the load current or load voltage can be transformed over the SELV barrier and converted to information, which is proportional to the load current or load voltage.

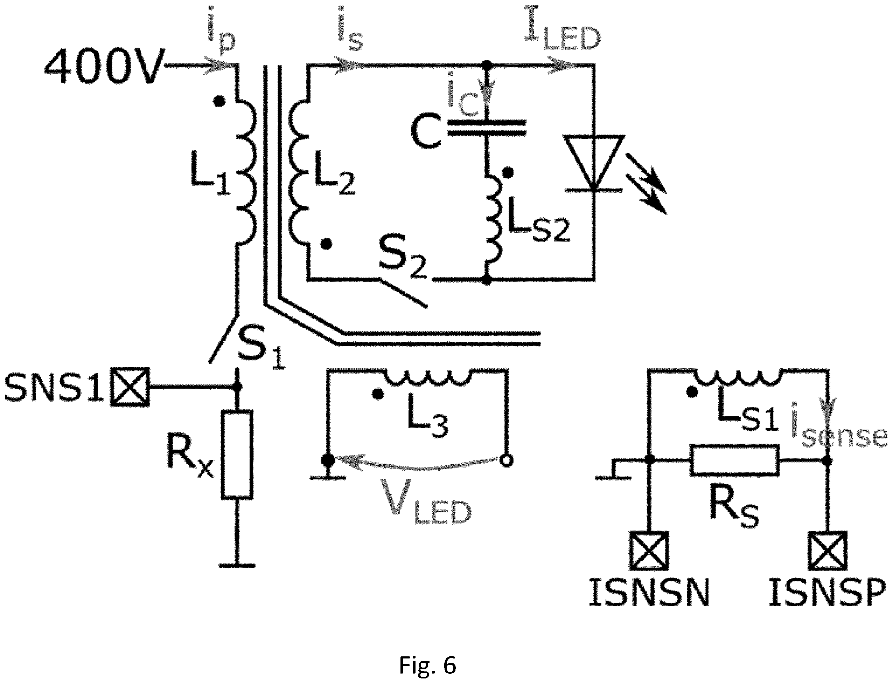

FIG. 6 shows a simplified schematic illustration of a conventional synchronous flyback converter with measurement means to measure the load current and the load voltage. The load current (e.g., an LED current $I_{LED}$) is measured by monitoring the current $i_C$ through the capacitor $C$, via a current transformer comprising the magnetically coupled windings $L_{S1}$ and $L_{S2}$ as in the phase where the primary switch $S_1$ is on, the LED is exclusively supplied by the capacitor $C$. The combination of $L_{S1}$ and $R_S$ in FIG. 6 results in a frequency behavior of a high pass.

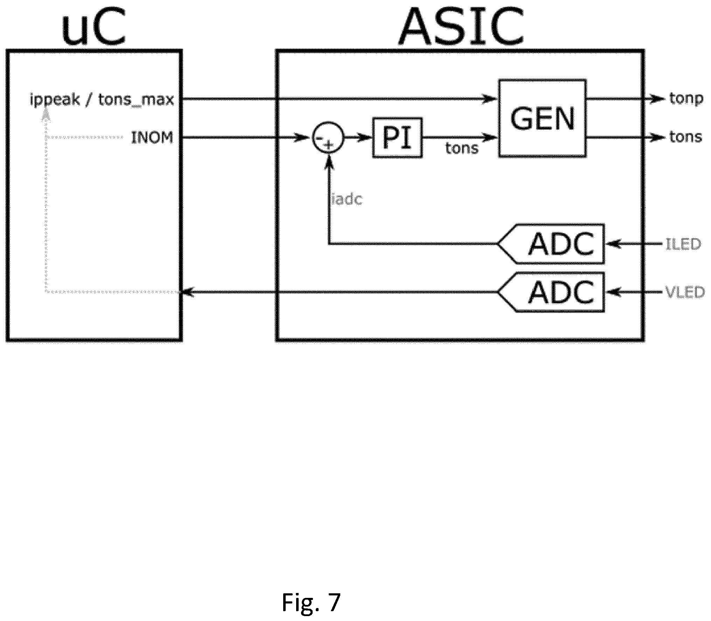

The voltage over the sensing resistor $V_{R_S} = i_{sense} * R_S$ (represented by ILED in FIG. 7) is connected with an internal ADC of an ASIC. This converted voltage (iadc in FIG. 7) is a feedback value for a controller integrated into the ASIC. The output of the controller represents the secondary on-time *tons* of a secondary switch (S2 in FIG. 6) of a flyback converter. A generator module (GEN in FIG. 7) in the ASIC generates the switching signals for the primary switch (S1 in FIG. 6) and the secondary switch (S2 in FIG. 6). For instance the generator module (GEN in FIG. 7) in the ASIC generates switching signals for the primary switch (S1 in FIG. 6) comprising a certain primary on-time *tonp* and a primary off-time *toffp*. The generator module (GEN in FIG. 7) in the ASIC may as well generate switching signals for the secondary switch (S2 in FIG. 6) comprising a certain secondary on-time *tons* and a secondary off-time *toffs*. Depending on the clocking of the primary switch S1 and secondary switch S2, the load current may be influenced by the controller 202.

The load voltage (which e.g. is the LED voltage) can be measured by a measurement of the voltage *VLED* over an additional winding $L_3$ of the power transformer of the flyback converter. When the primary side switch $S_1$ is closed, there will be a primary side current $i_p$ through the primary side switch $S_1$ and the primary winding $L_1$ of the power transformer thereby the power transformer will be magnetized. When the primary side switch $S_1$ is being switched off and a secondary side current $i_s$ flows through the secondary winding $L_2$ as the power transformer will demagnetize. During the demagnetization phase the voltage over the secondary winding $L_2$ will be equal to the load voltage as the secondary winding $L_2$ is switched in parallel to the load (e.g., the LED) as long as the secondary side switch $S_2$ is closed. As the transformer winding ratio is known the load voltage can be detected by a measurement of the voltage of the additional winding $L_3$ (as the reflected voltage of the secondary winding $L_2$).

A control behaviour of the synchronous switch of a flyback converter differs from the behaviour of an synchronous buck or a boost converter. Within the synchronous flyback, a longer secondary on-time *tons* of the secondary switch results in a lower load current and vice versa. For example, to get a higher load current, an INOM (i.e., a reference variable or control value of a desired load current) must be increased by the user or the uC. The controller deviation ($e = iadc - INOM$) becomes smaller and as a result, the secondary on-time gets smaller.

Conventional sensing circuits with a non-linear behaviour are not corrected. E.g., it is not possible to design the sensing circuit of an synchronous flyback in a way that the non-linear frequency behaviour only has a marginal influence (e.g., by shifting a corner frequency of the sensing circuit far below a lowest switching frequency of the converter).

As no fix by hardware design is possible (like in the case of the sFLB), the sensing behaviour depends on the switching frequency $f_{sw}$ or to the load voltage $V_{load}$:

$$f_{sw} = \frac{1}{tonp} + V_{load} * \frac{\Delta i_S}{L}$$

Where *tonp* is the primary on-time which depends on a bus voltage and a magnetizing inductance, which are both constant for a dedicated load current. The $\frac{\Delta i_S}{L}$ part is also constant (for a dedicated load current), which is why this term also can be skipped. In other words, the frequency can be proportional to the voltage:

$$f_{sw} \propto V_{LED}$$

The inductance and resistor combination ($L_{S1}$ and $R_S$ in FIG. 6) shows a high pass behaviour with a dedicated corner frequency. If signals go below this corner frequency (e.g. at lower load voltage) the sensing signal will be damped, the voltage at the ADC will be decreased and the controller tries to decrease the secondary on-time *tons* to increase the sensed voltage with the effect that the load current increases as well (and deviates from a target range, that is, goes out of specification).

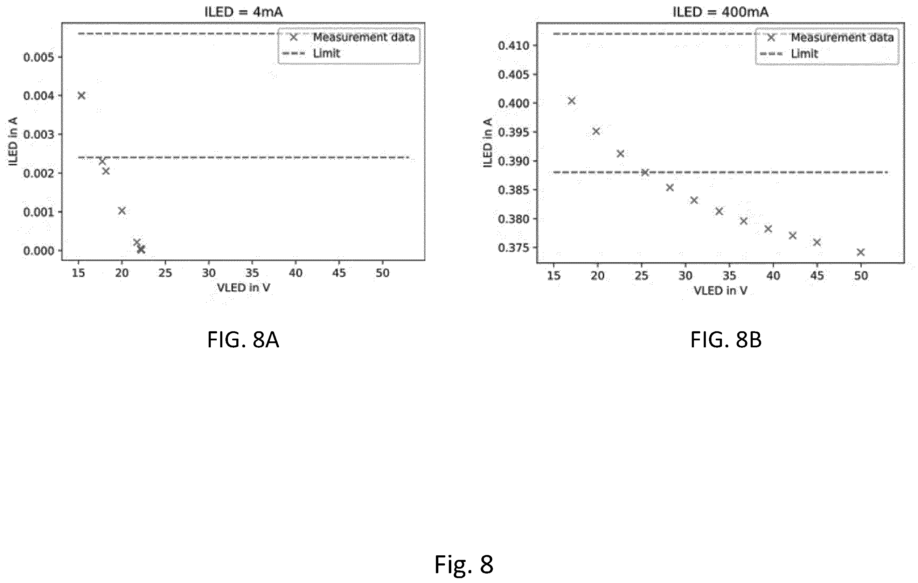

FIG. 8A and FIG. 8B illustrate a load voltage dependence (i.e. an LED voltage dependence) of two separate LED currents by plotting the measured LED current (y-Axis) over different LED voltages (x-Axis). In both cases the starting point was the lowest LED voltage (15V). At this point the reference signal (INOM value) was tuned to reach the set/whished LED current. Afterwards the LED voltage of the load was increased. By increasing the LED voltage, the switching frequency increases also, and the sensing circuit damps less which leads to a higher sensed voltage. The controller tries to compensate that by increasing the secondary on-time *tons* which ends up in a decreasing LED current. Over the whole LED voltage range, it is not possible to stay with the current within the specified LED current range. For a low LED current (FIG. 8A) this ends up in a secondary on-time *tons* where no more LED current flows, but the sensed voltage of the sensing signal still fits with the reference signal.

Besides the voltage depending sensing behaviour, there is also a dependence of the LED current. The root cause is that for each LED current another frequency behaviour over the LED voltage occurs. This is because the primary peak and so the secondary peak (c.f. $\Delta is$) depends on the set LED current.

That is, load voltage and load current dependent sensing leads to a load current accuracy, which cannot meet a specification (i.e., an accuracy over a whole load voltage range).

In other words, the problem with a conventional isolated converter, such as a synchronous flyback converter, is that the measurement of a load current value reacts to a change of a load voltage. This means that a correction must take into account a respective setting of the current value specification. An illustration of the problem is shown as a series of measuring points for two exemplary currents (4 mA and 400 mA) in FIG. 8A and FIG. 8B.

In a conventional isolated converter e.g. flyback converter, the measurement of the load current takes place via a SELV barrier using coils and a shunt resistor. This is, why a measured current value reacts sensitively to a switching frequency of the secondary-side switch, in that the measurement arrangement behaves like a high-pass filter. The ASIC is thus provided with measured values that allegedly characterize the current as an input variable, to which it reacts, with the values being caused by a change in the damping behavior of the measuring circuit depending on the switching frequency and thus ultimately depending on the load. This behavior leads to the different course of the series of measured values for the two current values shown in FIG. 8A and FIG. 8B.

Therefore, there is a need for an improved sensing circuit which overcomes this drawback using the same measurement means as for a conventional converter, e.g. shown in FIG. 6..

SUMMARY

In view of the above-mentioned problem, an objective of embodiments of the present disclosure is to improve the conventional sensing circuit.

This or other objectives may be achieved by embodiments of the present disclosure as described in the enclosed independent claims. Advantageous implementations of embodiments of the present disclosure are further defined in the dependent claims.

A first aspect of the present disclosure provides a sensing circuit for an isolated converter, wherein the sensing circuit is configured to obtain load current information, obtain load voltage information, determine, by a correction module of the sensing circuit, corrected load current information based on the load current information, the load voltage information and a correction formula, wherein the correction formula is configured to compensate a frequency dependent behaviour of the sensing circuit, and output the corrected load current information.

This enables compensating the frequency behaviour of a conventional sensing circuit (e.g., within an ASIC and in real-time), which leads to a stable load current over the whole load voltage range. This also ensures that an isolated converter can be realized, which has a frequency dependent sensing circuit and fulfills a specified current accuracy over a predefined output window (e.g. from minimum load voltage to maximum load voltage). An sFLB converter can be realized which fulfils predefined standard specifications. A synchronous Flyback can be produced cheaper (based on build of material) than an LLC or LLC device of the same power range. So, it is possible to realize a cheaper LED converter for the lower power range.

In an implementation form of the first aspect, the sensing circuit is further configured to output the corrected load current information to a controller of the isolated converter.

This ensures that an isolated converter can be equipped and improved with the sensing circuit.

In particular, the controller is for controlling an on-time or an off-time of one or more switches of the isolated converter.

In another implementation form of the first aspect, the correction formula comprises a 2nd order equation for correcting the load current information.

This ensures that the frequency behaviour of the sensing circuit can be even more improved.

In another implementation form of the first aspect, the corrected load current information is calculated based on the following equation: iest = iadc + corr, wherein iest is the corrected load current information, iadc is the load current information, and corr is a first correction value.

In another implementation form of the first aspect, the first correction value is calculated based on the following equation: corr = iADCideal - y, wherein iADCideal is a predefined value of the sensing circuit, and y is a second correction value.

In another implementation form of the first aspect, the second correction value is calculated based on the following equation: $y = p[0] * vadc^2 + p[1] * vadc + p[2]$, wherein vadc is the load voltage information, and p[0] to p[2] are coefficients of a second order equation.

In another implementation form of the first aspect, p[0] to p[2] are configurable by a microcontroller connected to the sensing circuit.

In another implementation form of the first aspect, the sensing circuit is further configured to measure a load current and obtain the load current information based on the measured load current.

In particular, the load current information is a digitally converted load current.

In another implementation form of the first aspect, the sensing circuit is further configured to measure a load voltage and obtain the load voltage information based on the measured load voltage.

In particular, the load voltage information is a digitally converted load voltage.

In another implementation form of the first aspect, the load current is an LED current.

This is beneficial, as an LED converter can be equipped with the sensing circuit.

In another implementation form of the first aspect, the load voltage is an LED voltage.

This is beneficial, as an LED converter can be equipped with the sensing circuit.

In another implementation form of the first aspect, the correction formula comprises a third correction value for correcting influence of an ambient temperature on load current accuracy.

In another implementation form of the first aspect, the sensing circuit is implemented as or as part of an ASIC.

A second aspect of the present disclosure provides an LED converter with a sensing circuit according to the first aspect or any of its implementation forms.

Preferably the LED converter comprises an isolated converter. In particular, the LED converter may comprise a flyback LED converter as an isolated converter. More particular, the flyback LED converter is a synchronous flyback LED converter. The isolated converter may be alternatively formed by a resonant converter, e.g. LLC converter or LCC converter.

A third aspect of the present disclosure provides a method for operating a sensing circuit for an isolated converter, wherein the method comprises the steps of obtaining, by the sensing circuit, load current information, obtaining, by the sensing circuit, load voltage information, determining, by a correction module of the sensing circuit, corrected load current information based on the load current information, the load voltage information and a correction formula, wherein the correction formula compensates a frequency dependent behaviour of the sensing circuit, and outputting, by the sensing circuit, the corrected load current information.

In an implementation form of the third aspect, the method further includes outputting, by the sensing circuit, the corrected load current information to a controller of the isolated converter.

In another implementation form of the third aspect, the correction formula comprises a 2nd order equation for correcting the load current information.

In another implementation form of the third aspect, the corrected load current information is calculated based on the following equation: iest = iadc + corr, wherein iest is the corrected load current information, iadc is the load current information, and corr is a first correction value.

In another implementation form of the third aspect, the first correction value is calculated based on the following equation: corr = iADCideal - y, wherein iADCideal is a predefined value of the sensing circuit, and y is a second correction value.

In another implementation form of the third aspect, the second correction value is calculated based on the following equation: $y = p[0] * vadc^2 + p[1] * vadc + p[2]$, wherein vadc is the load voltage information, and p[0] to p[2] are coefficients of a second order equation.

In another implementation form of the third aspect, p [0] to p[2] are configurable by a microcontroller connected to the sensing circuit.

In another implementation form of the third aspect, the method further includes measuring, by the sensing circuit, a load current and obtaining, by the sensing circuit, the load current information based on the measured load current.

In another implementation form of the third aspect, the method further includes measuring, by the sensing circuit, a load voltage and obtaining, by the sensing circuit, the load voltage information based on the measured load voltage.

In another implementation form of the third aspect, the load current is an LED current.

In another implementation form of the third aspect, the load voltage is an LED voltage.

In another implementation form of the third aspect, the correction formula comprises a third correction value for correcting influence of an ambient temperature on load current accuracy.

In another implementation form of the third aspect, the sensing circuit is implemented as or as part of an integrated control circuit .

The invention also relates to an LED converter comprising an isolated converter and designed to supply a load, e.g. a LED load, with a load current, wherein the isolated converter is controlling the load current depending on the corrected load current information.

The third aspect and its implementation forms provide the same advantages as the first aspect and its implementation forms, respectively.

BRIEF DESCRIPTION OF DRAWINGS

In the following, the invention is described exemplarily with reference to the enclosed figures, in which

FIG. 1      shows a schematic view of a sensing circuit according to an embodiment of the present disclosure;

FIG. 2      shows a schematic view of a sensing circuit according to an embodiment of the present disclosure in more detail, in particular by illustrating the control principal of an sFLB;

FIG. 3      shows a schematic view of a LED converter comprising an isolated converter according to the invention;

FIG. 4      shows a schematic view of an LED current depending on an LED voltage when using the sensing circuit according to the present disclosure;

FIG. 5      shows a schematic view of a method according to an embodiment of the present disclosure;

FIG. 6      shows another schematic view of a conventional flyback converter;

FIG. 7      shows yet another schematic view of a conventional synchronuous flyback converter;

FIG. 8      shows a schematic view of an LED current depending on an LED voltage when using a conventional sensing circuit.

DETAILED DESCRIPTION OF PREFERRED EMBODIMENTS

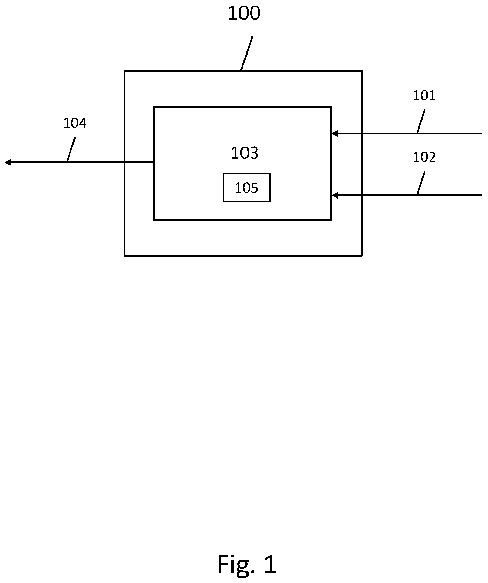

FIG. 1 shows a sensing circuit 100 for an isolated converter 201, e.g. flyback converter. The sensing circuit 100 is configured to obtain load current information 101 and to obtain load voltage information 102. The sensing circuit 100 then determines, by a correction module 103 of the sensing circuit 100, corrected load current information 104 based on the load current information 101, the load voltage information 102 and a correction formula 105. The correction formula 105 is configured to compensate a frequency dependent behavior of the sensing circuit 100 and output the corrected load current information 104.

In other words, the sensing circuit 100 supplements the conventional evaluation of current and voltage in that the measured value of the load current is corrected by an estimator (i.e. correction module 103).

Characterizing values for a load current and a load voltage can be supplied to the correction module 103, e.g., in a digital or analog manner. The load voltage for example can be detected by an auxiliary winding on a primary side of a converter (which is not shown in the figure). The correction can be implemented in that a correction value is added to the actually recorded value of the load current, with the correction value being determined using an equation. This correction value is then added to the measured current value. Thereby, the corrected load current information 104 is calculated.

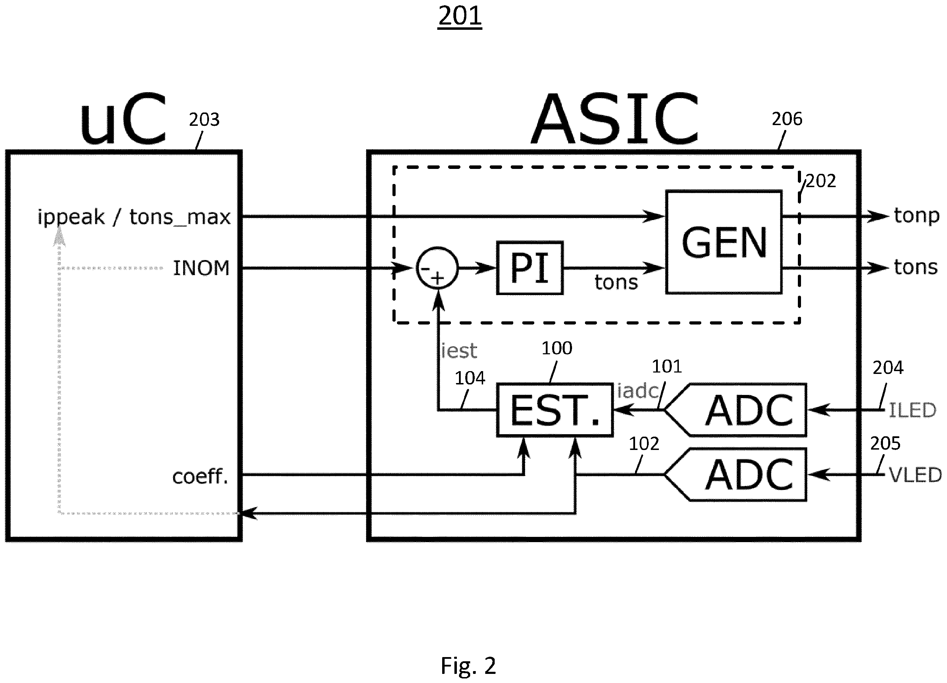

The sensing circuit 100 is now going to be described in more detail in view of FIG. 2. The sensing circuit 100 of FIG. 2 includes all functions and features of the sensing circuit 100 as described in view of FIG. 1.

As it is further illustrated in FIG. 2, the corrected load current information 104 can be output to a controller 202 of an isolated converter 201. The converter 201 (e.g. a flyback converter 201) then can be controlled based on the corrected load current information 104. Preferably the controller 202 controls the on-time of a secondary switch of a synchronous flyback.

Further optionally, the correction formula 105 can comprise a 2nd order equation for correcting the load current information 101. That is, the correction value can be determined using an equation of a second order. In other words, the correction value is determined non-linearly, respectively as a quadratic equation depending on the measured voltage.

The corrected load current information 104, that is, the feedback signal for the controller (labelled "*iest*" in FIG. 2), is provided by the correction module 103 (labelled "EST.", i.e. an estimator) and can compensate the frequency behaviour in particular based on the following equations:

Optionally, the corrected load current information 104 can be calculated based on the following equation:

$$iest = iadc + corr$$

In this equation, *iest* is the corrected load current information 104, *iadc* is the load current information 101, and *corr* is a first correction value. That is, *iadc* is the digital converted LED current (ILED in FIG. 2)

Further optionally, the first correction value can be calculated based on the following equation:

$$corr = iADCideal - y$$

In this equation, *iADCideal* is a predefined value of the sensing circuit, and y is a second correction value. *iADCideal* in particular can be a value preset by a microcontroller uC.

Further optionally, the second correction value can be calculated based on the following equation:

$$ y = p[0] * vadc^2 + p[1] * vadc + p[2] $$

In this equation, *vadc* is the load voltage information 102, and *p*[0] to *p*[2] are coefficients of a second order equation. In particular, since the second correction value shows a second order behaviour, also the sensing circuit 100 shows a second order behaviour. In particular, *vadc* is the digitally converted voltage of VLED in FIG. 2.

In particular, p[0] to p[2] are configurable by a microcontroller 203 connected to the sensing circuit 100, for example depending on the set LED current and/or INOM.

For example for one LED converter / wattage and for a 4 mA LED current, these values can be: p[0]=-1.12e - 6; p[1]=74.63e - 3; p[2]= 1728.71

For example for one LED converter / wattage and for a 400 mA LED current, these values can be: p[0]=-5.6e - 6; p[1]=315.4e - 3; p[2]= 30151.35

In other words, the coefficient values p[0] to p[2] can be determined in the microcontroller uC 203 and fed to the correction module 103 (e.g., integrated in an integrated control circuit such as an ASIC) to determine the correction value there using the respectively required coefficients.

Further optionally, the sensing circuit 100 can measure a load current 204 and obtain the load current information 101 based on the measured load current 204. That is, the load current information 101 is the digitally converted load current 204.

Further optionally, the sensing circuit 100 can measure a load voltage 205 and obtain the load voltage information 102 based on the measured load voltage 205. That is, the measured load voltage information 102 is the digitally converted load voltage 205.

Further optionally, the load current 204 is an LED current. Further optionally, the load voltage 205 is an LED voltage.

The correction formula 105 may also comprises a third correction value for correcting influence of an ambient temperature on load current accuracy.

In particular, the sensing circuit 100 can be implemented as or as part of an integrated control circuit 206, e.g. an ASIC 206. An integrated control circuit, such as an ASIC, can be used to carry out the operations performed by the correction module, if other controllers would be too slow for performing said operations. In principle, however, any integrated circuit that allows the measured value to be corrected sufficiently quick can be used. This is beneficial as a too slow correction would lead to a visible change in the emitted light, since jumps in the output currents occur because the converter only reacts to corrections that are carried out slowly and in stages.

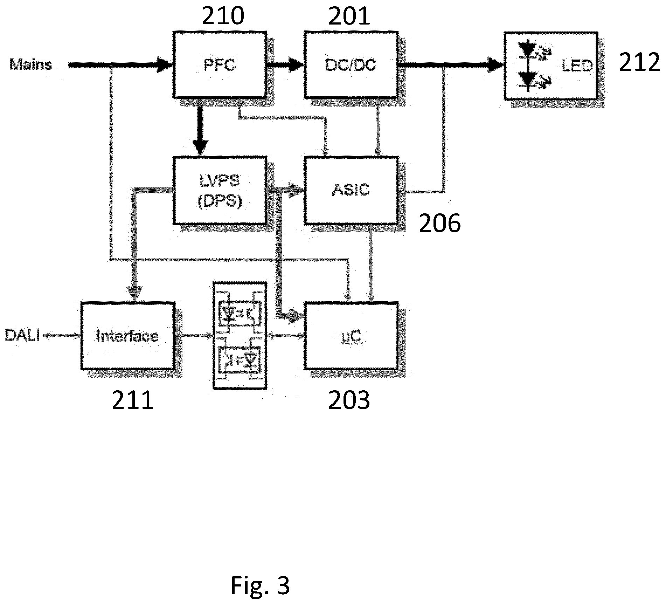

FIG. 3 shows an LED converter according to the invention comprising an isolated converter 201, which is formed by a DC/DC-converter. The isolated converter 201 may be formed for instance by a synchronous flyback as shown in FIG. 6 including measurement means for the load current and the load voltage. The isolated converter 201 may be supplied with a DC voltage provided by a power factor correction circuit (PFC) 210, which forms an AC/DC-converter. The isolated converter 201 supplies the LED 212 with a load current. The isolated converter 201 is controlled by an integrated control circuit 206 which may also control the operation of the power factor correction circuit (PFC) 210. The sensing circuit 100 (not shown here) may be integrated into the integrated control circuit 206. The operation of the LED converter may be controlled via a dimming interface such as a DALI interface via the interface circuit 211. The interface circuit 211 may receive digital dimming commands and may forward the received digital dimming commands to the microcontroller 203 and / or the integrated control circuit 206. For instance, the received digital dimming commands may define reference signals such as INOM (the nominal load current, or the LED current). The microcontroller 203 may define or influence control parameters of the integrated control circuit 206 in order to influence the operation and control of the integrated control circuit 206 and thus the load current.

The LED converter may comprise an isolated converter 206 and is designed to supply a load, e.g. a LED load, with a load current, wherein the isolated converter 201 is controlling the load current 204 depending on the corrected load current information 104 outputted by the sensing circuit 100.

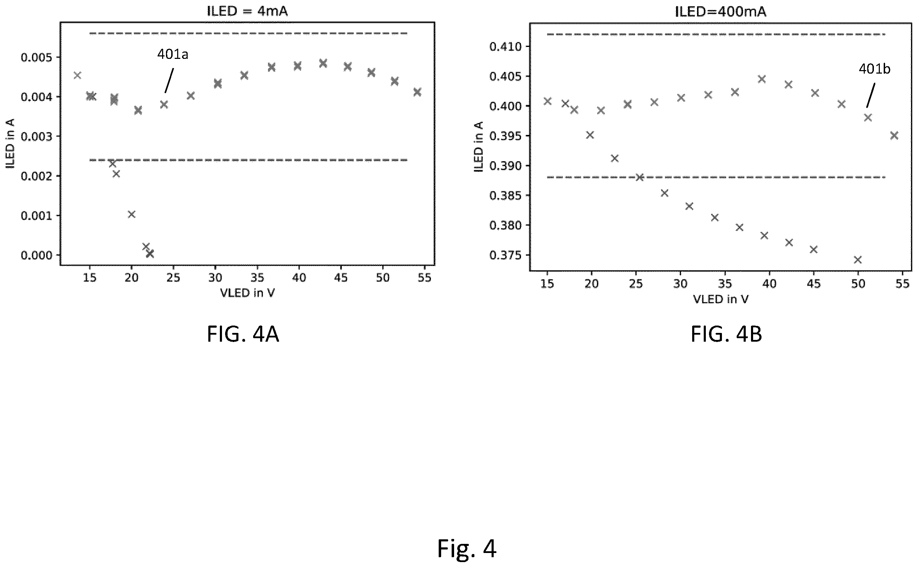

FIG. 4A and FIG. 4B comparing the current values for 4 mA and 400 mA (401a, 401b) show upper and lower limit values for the LED current (dotted lines), which define a target corridor and which can be achieved with the non-linear correction. It should be noted that the sensing circuit 100 is not limited to be used in an sFLB. Basically, the sensing circuit 100 can improve any type of SELV barrier control gear, with a frequency dependency on the secondary side leading to a falsification of the measurement result.

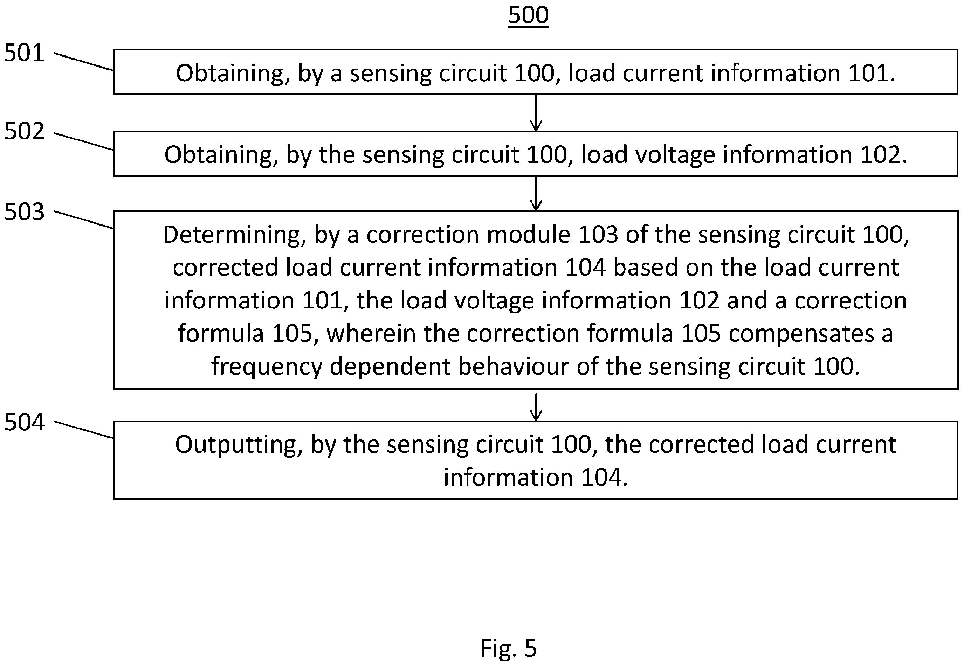

FIG. 5 shows a method 500 for operating a sensing circuit 100 for an isolated converter 201. The method 500 comprises a first step of obtaining 501, by the sensing circuit 100, load current information 101, and a second step of obtaining 502, by the sensing circuit 100, load voltage information 102. The method further comprises a third step of determining 503, by a correction module 103 of the sensing circuit 100, corrected load current information 104 based on the load current information 101, the load voltage information 102 and a correction formula 105, wherein the correction formula 105 compensates a frequency dependent behaviour of the sensing circuit 100. The method 500 comprises a last step of outputting 504, by the sensing circuit 100, the corrected load current information 104.

**Claims**

1. A sensing circuit (100) for an isolated converter (201), e.g. a flyback or a resonant isolated converter, wherein the sensing circuit (100) is configured to:

   - obtain load current information (101),
   - obtain load voltage information (102),
   - determine, by a correction module (103) of the sensing circuit (100), corrected load current information (104) based on the load current information (101), the load voltage information (102) and a correction formula (105), wherein the correction formula (105) is configured to compensate a frequency dependent behaviour of the sensing circuit (100), and
   - output the corrected load current information (104).

2. The sensing circuit (100) according to claim 1, further configured to output the corrected load current information (104) to a controller (202) of the isolated converter (201).

3. The sensing circuit (100) according to claim 1 or 2, wherein the correction formula (105) comprises a 2$^{nd}$ order equation for correcting the load current information (101).

4. The sensing circuit (100) according to any one of the preceding claims, wherein the corrected load current information (104) is calculated based on the following equation:

$$iest = iadc + corr$$

   wherein *iest* is the corrected load current information (104), *iadc* is the load current information (101), and *corr* is a first correction value.

5. The sensing circuit (100) according to claim 4, wherein the first correction value is calculated based on the following equation:

$$corr = iADCideal - y$$

   wherein *iADCideal* is a predefined value of the sensing circuit, and y is a second correction value.

6. The sensing circuit (100) according to claim 5, wherein the second correction value is calculated based on the following equation:

$$y = p[0] * vadc^2 + p[1] * vadc + p[2]$$

wherein *vadc* is the load voltage information (102), and p[0] to p[2] are coefficients of a second order equation.

7. The sensing circuit (100) according to claim 6, wherein p[0] to p[2] are configurable by a microcontroller (203) connected to the sensing circuit (100).

8. The sensing circuit (100) according to any one of the preceding claims, further configured to measure a load current (204) and obtain the load current information (101) based on the measured load current (204).

9. The sensing circuit (100) according to any one of the preceding claims, further configured to measure a load voltage (205) and obtain the load voltage information (102) based on the measured load voltage (205).

10. The sensing circuit (100) according to any one of the preceding claims, wherein the load current (204) is an LED current and/or, wherein the load voltage (205) is an LED voltage.

11. The sensing circuit (100) according to any one of the preceding claims, wherein the correction formula (105) comprises a third correction value for correcting influence of an ambient temperature on load current accuracy.

12. The sensing circuit (100) according to any one of the preceding claims, wherein the sensing circuit (100) is implemented as or as part of an integrated control circuit (206).

13. An LED converter with a sensing circuit (100) according to any one of claims 1 to 12.

14. The LED converter according to claim 13, further comprising an isolated converter (206) and designed to supply a load, e.g. an LED load, with a load current, wherein the isolated converter (201) is controlling the load current (204) depending on the corrected load current information (104).

15. A Method (500) for operating a sensing circuit (100) for an isolated converter (201), wherein the method (500) comprises the steps of:

   - obtaining (501), by the sensing circuit (100), load current information (101),
   - obtaining (502), by the sensing circuit (100),

load voltage information (102),
- determining (503), by a correction module (103) of the sensing circuit (100), corrected load current information (104) based on the load current information (101), the load voltage information (102) and a correction formula (105), wherein the correction formula (105) compensates a frequency dependent behaviour of the sensing circuit (100), and
- outputting (504), by the sensing circuit (100), the corrected load current information (104).

Fig. 1

## 201

Fig. 2

Fig. 3

EP 4 304 066 A1

FIG. 4A

FIG. 4B

Fig. 4

EP 4 304 066 A1

<u>500</u>

501 — Obtaining, by a sensing circuit 100, load current information 101.

502 — Obtaining, by the sensing circuit 100, load voltage information 102.

503 — Determining, by a correction module 103 of the sensing circuit 100, corrected load current information 104 based on the load current information 101, the load voltage information 102 and a correction formula 105, wherein the correction formula 105 compensates a frequency dependent behaviour of the sensing circuit 100.

504 — Outputting, by the sensing circuit 100, the corrected load current information 104.

Fig. 5

Fig. 6

EP 4 304 066 A1

Fig. 7

EP 4 304 066 A1

FIG. 8A

FIG. 8B

Fig. 8

Europäisches Patentamt

European Patent Office

Office européen des brevets

**EUROPEAN SEARCH REPORT**

Application Number

EP 22 18 3483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/103112 A1 (JIANG JIAN [CN] ET AL) 5 May 2011 (2011-05-05) | 1-10, 12-15 | INV. H02M1/00 H02M3/335 |
| Y | * abstract * * paragraph [0007] - paragraph [0071]; figures 1-23 * | 11 | |
| X | US 2019/195922 A1 (JEFFERIES KEVIN M [US] ET AL) 27 June 2019 (2019-06-27) | 1-10,12, 15 | |
| Y | * abstract * * paragraph [0003] - paragraph [0040]; figures 1-6 * | 11 | |
| Y | EP 3 890 445 A1 (TRIDONIC GMBH & CO KG [AT]) 6 October 2021 (2021-10-06) | 11 | |
| A | * abstract * * paragraph [0009] - paragraph [0115]; figures 1-6c * | 1-10, 12-15 | |
| Y | US 2018/287495 A1 (ISHAM ROBERT H [US] ET AL) 4 October 2018 (2018-10-04) * abstract * * paragraph [0010] - paragraph [0070]; figures 1-6 * | 11 | TECHNICAL FIELDS SEARCHED (IPC) H02M |
| A | US 2021/018573 A1 (VUILLERMET YANNICK [FR] ET AL) 21 January 2021 (2021-01-21) * abstract * * paragraph [0006] - paragraph [0070]; figures 1-5 * | 1-15 | |

The present search report has been drawn up for all claims

| Place of search | Date of completion of the search | Examiner |
|---|---|---|
| The Hague | 14 December 2022 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**EP 4 304 066 A1**

## ANNEX TO THE EUROPEAN SEARCH REPORT
### ON EUROPEAN PATENT APPLICATION NO.

EP 22 18 3483

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | | Publication date | Patent family member(s) | | Publication date |
|---|---|---|---|---|---|
| US 2011103112 | A1 | 05-05-2011 | TW 201129891 A | | 01-09-2011 |
| | | | US 2011103112 A1 | | 05-05-2011 |
| US 2019195922 | A1 | 27-06-2019 | NONE | | |
| EP 3890445 | A1 | 06-10-2021 | CN 115053635 A | | 13-09-2022 |
| | | | EP 3890445 A1 | | 06-10-2021 |
| | | | WO 2021197902 A1 | | 07-10-2021 |
| US 2018287495 | A1 | 04-10-2018 | CN 105388350 A | | 09-03-2016 |
| | | | TW 201608248 A | | 01-03-2016 |
| | | | US 2016065067 A1 | | 03-03-2016 |
| | | | US 2018287495 A1 | | 04-10-2018 |
| | | | US 2019173381 A1 | | 06-06-2019 |
| US 2021018573 | A1 | 21-01-2021 | EP 3767311 A1 | | 20-01-2021 |
| | | | US 2021018573 A1 | | 21-01-2021 |

EPO FORM P0459

For more details about this annex : see Official Journal of the European Patent Office, No. 12/82